(19) Europäisches Patentamt
European Patent Office
Office européen des brevets

(11) Publication number: 0 206 690
A1

(12) # EUROPEAN PATENT APPLICATION

(21) Application number: 86304569.6

(22) Date of filing: 13.06.86

(51) Int. Cl.[4]: C 02 F 1/20, C 02 F 3/30

(30) Priority: 14.06.85 GB 8515101

(43) Date of publication of application: 30.12.86
Bulletin 86/52

(84) Designated Contracting States: DE FR GB IT NL

(71) Applicant: ANGLIAN WATER AUTHORITY, Ambury Road, Huntingdon Cambridgeshire PE18 6NZ (GB)

(72) Inventor: Croll, Brian Thomas, 10 Caldecote Road, Stilton Peterborough, PE7 3RH (GB)

(74) Representative: Perry, Robert Edward et al, GILL JENNINGS & EVERY 53-64 Chancery Lane, London WC2A 1HN (GB)

(54) **Ground-water treatment.**

(57) Ground-water is treated by introducing underground an agent such as sodium metabisulphite which renders the underground environment substantially oxygen-free, with the intention that naturally-occurring bacteria can act anaerobically to break down nitrates in the ground-water.

EP 0 206 690 A1

GROUND-WATER TREATMENT

This invention relates to the treatment of ground-water and, in particular, to the control of nitrate levels in ground-water intended for introduction into the general water supply.

Nitrates are widely used as fertilisers. As such, they are taken up by plants during their growth. On plant degradation, however, nitrates are released. Particularly in areas of intense agriculture, therefore, the concentration of nitrates in ground-water can reach levels which are generally considered undesirably high for water supplies.

Standards exist, to the effect that the water supply nitrate content should be no more than 100 mg/l, and preferably not more than 50 mg/l, calculated as $NO_3$. Such levels can be exceeded in ground-water, in circumstances of the type described and, without treatment, it is likely that an increasing number of ground-water supplies will have nitrate contents approaching and exceeding limits which are potentially enforcible and likely to be reduced in the interests of environment control. The maximum acceptable nitrate level given by the World Health Organisation is 22.6 mg/l, on the same basis as above.

For introduction into the general water supply, ground-water having an excessive nitrate content must be treated. Conventionally, this has been done in a nitrate removal plant, above ground. Nitrate removal can be achieved by ion-exchange or microbiological techniques, the latter using micro-organisms which function anaerobically to break down nitrates and generate nitrogen gas. For example, EP-A-0065035 describes surface apparatus for denitrifying water, by gasifying the water for treatment with hydrogen and using

hydrogen-oxidising micro-organisms in the reactor. These various techniques are expensive.

Some nitrate treatment occurs naturally, underground. For example, naturally-occurring micro-organisms degrade nitrates in the anaerobic conditions prevailing in aquifers passing under clay. It is not generally possible, however, to collect sufficient ground-water which has been treated in this way.

According to the present invention, a process for treating ground-water comprises introducing underground an agent which renders the underground environment substantially oxygen-free.

The present invention is based on the realisation that bacteria occurring naturally in the ground can be used to break down nitrates, if the environment is deliberately made oxygen-free, i.e. the bacteria can function anaerobically. If anaerobic metabolism can be encouraged underground, at points where nitrate-laden water is converging or is about to converge, ground-water having a reduced nitrate content can be obtained and put into the water supply without the need for expensive treatment of the type described above.

In addition to acting as an oxygen remover, the agent (herein described, for convenience, as a "reducing agent") which is used in the invention will usually have two further characteristics. The first is that it does not cause the formation of precipitates in situ (in order that the aquifer should not be blocked), and the second is that it should neither be a pollutant nor cause the production of pollutants, in use.

A suitable agent for use in the invention is an oxidisable material which can be introduced as a gas or as an aqueous solution, and which reacts with oxygen dissolved in the ground-water, to form an environmentally-safe water-soluble product, e.g. an

alkali metal, preferably sodium, sulphate. A suitable gas is $SO_2$ and a suitable water-soluble agent is an alkali metal sulphite or metabisulphite.

It has been found that an aqueous solution of sodium metabisulphite can successfully be used to reduce oxygen levels underground. There is the possibility that calcium in the water used to make the solution and atmospheric oxygen can combine with the reducing agent to cause precipitation of calcium sulphate in the storage tank, according to

$$2\ Ca^{2+} + 2\ SO_3^{\ 2-} + O_2 \rightarrow 2\ CaSO_4$$

This is undesirable, because it can lead to blockage of feeder pipes and/or the aquifer. The reducing agent may therefore best be stored under an inert gas such as $N_2$.

The amount of reducing agent which is required for the purposes of the present invention can be calculated on a theoretical basis. For example, it can be shown that two mols of bisulphite ion in solution are required to reduce one mol of oxygen. If the ground-water contains 30% dissolved oxygen at 8 C, then the ground-water is known to contain 3.6 mg/l $O_2$ or 1.125 x $10^{-4}$ mols/l $O_2$. The volume of water pumped from the well is, say, 250 l/min or 3.6 x $10^5$ l/d. Thus, for deoxygenation, 40.5 mols of oxygen need to be removed from the ground-water each day. Further, given that 2 mols of $HSO_3^{\ -}$ are provided by the dissolution of 190 g of dry sodium metabisulphite (to give a concentration of 1 mol/l), then 40.5 x 190 = 7695 g of $Na_2S_2O_5$ are required to be injected into the ground-water each day.

The amount of the reducing agent which is used must often be calculated carefully. Factors to be taken into account include the dissolved oxygen content of the ground-water and the rate of pump discharge from the

well. Too high a dose may have the undesirable effect of reducing other species in the ground-water, e.g. iron, leading to precipitation of iron oxides in the pumped water and even to clogging of the aquifer by such amorphous material.

In order to encourage the bacterial activity necessary to break down nitrates in the ground-water, it may be desirable to introduce, suitably together with the reducing agent, one or more nutrients. For example, methanol may be used. The amount of any nutrient should be controlled, in order to avoid promoting growth sufficient to block the aquifer.

For obvious reasons, it is convenient to collect ground-water from existing boreholes. The process of the invention may then be operated, in order to reduce the nitrate content at the borehole, by introducing the reducing agent underground at a point (or preferably a number of points) on the aquifer "upstream" from the borehole. There may of course be more than one aquifer, but suitable points for treatment can be determined by routine experiment; for example, a tracer such as potassium bromide (generally non-reactive and not absorbed on to particle surfaces, while having a low concentration in natural ground-water) can be introduced and its distribution observed over a period of days, e.g. in the vicinity of an existing borehole. Bores can then be made at appropriate points, for the introduction of the reducing agent and, if desired, a nutrient source.

Two bores, or a twin bore, may be used in carrying out the invention, one bore for pumping up water and the other for returning water with the reducing agent. A gas such as $SO_2$ may be blown down.

Alternatively, one borehole may be used in an alternating cycle of pumping the reducing agent into the aquifer, followed by extraction of treated water.

The applicability of the process of the invention may be dependent on the nature of the ground. It may be relatively easy to conduct the process in, say, gravel which is relatively homogeneous, and less easy in, say, limestone which is highly fissured. In material such as limestone, the aquifer is effectively open to the surface atmosphere, and it may therefore be necessary to use a relatively high amount of the reducing agent.

The following Example illustrates the invention.

Example

60 kg KBr were injected into the ground-water at each of four points 40 m distant from an existing well, and the water column in each hole was well mixed. This increased the bromide concentration from a background value of 0.2 ppm to $10^5$ ppm. Samples were obtained from the injection and from 22 disposable well-points acting as observation points, to monitor the bromide dispersion. The areas of dispersion between the injection point and the well were "plumes" which developed over about 2 days.

A flow net diagram was drawn utilising the water-level data obtained from the tracing experiment. Dispersion plumes, originating from the existing four injection holes, were drawn on the diagram. The positions of eight further injection holes were then chosen, to allow the greatest area of aquifer to be covered by the predicted dispersion plumes. Constraints on the final positions were: the 8 m wide lateral dispersion of a plume observed in the tracing experiment, about 16 m from the corresponding injection point, and known obstructions such as buildings and trees. The eight further injection points were then installed using a well-jetting technique. Each point comprised a vertically-oriented tube, a 50 mm diameter Demco well screen, with a lockable top end cap.

Sodium metabisulphite to be injected underground was first dissolved in deionised water and then introduced into a large plastic header tank, 170 l in capacity, where it was maintained under $N_2$. A multi-channel peristaltic pump was used to deliver the solution to the 12 injection points via white, 3 mm bore, PVC tubing inserted into the respective well screens. The pump was capable of delivering 4 ml of solution per minute per channel. At each injection point, the PVC tubing was perforated in order to allow injection over the whole of the saturated depth of the aquifer.

The concentration of sodium metabisulphite injected into each hole equalled 0.033 mols/l, enough to remove 40% dissolved oxygen from the gravel water. The ground-water was subsequently tested for dissolved oxygen using a dissolved meter (EIL model 1520); given that the meter has an accuracy of ±1%, initial results showed that deoxygenation of the ground-water was achieved at least at an injection hole and six points in the vicinity of the injection hole. Over 5 days, there was a corresponding decrease in pH from an initial 7.14 at the well to a mean value for the points of 6.78.

CLAIMS

1. A process for treating ground-water, which comprises introducing underground an agent which renders the underground environment substantially oxygen-free.

2. A process according to claim 1, in which the agent is $SO_2$ or an alkali metal sulphite.

3. A process according to claim 1, in which the agent is an alkali metal metabisulphite.

4. A process according to any preceding claim, in which the agent is introduced underground at a number of points on the aquifer "upstream" from a borehole associated with means for pumping up the ground-water.

5. A process according to claim 4, which comprises establishing the respective positions of the said points by a tracer test.

0206690

European Patent Office

# EUROPEAN SEARCH REPORT

Application number

EP 86 30 4569

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | CHEMICAL ABSTRACTS, vol. 75, no. 4, 26th July 1971, page 305, abstract no. 25171t, Columbus, Ohio, US; S.E. SNAVELY Jr.: "Chemical removal of oxygen from natural waters", & J. PETROL. TECHNOL. 1971, 23(April), 443-6<br>--- | 1,2 | C 02 F 1/20<br>C 02 F 3/30 |
| Y | CHEMICAL ABSTRACTS, vol. 77, no. 18, 30th October 1972, page 248, abstract no. 118091y, Columbus, Ohio, US; R.F. WEETER: "Dissolved oxygen control in injection water", & MATER. PROT. PERFORMANCE 1972, 11(8), 29-32<br>--- | 1-3 | |
| Y | US-A-3 996 135 (NALCO)<br>* Column 4; claims 1,3 *<br>--- | 1-3 | TECHNICAL FIELDS SEARCHED (Int. Cl.4) |
| A | DE-A-3 414 556 (RHEINISCH-WESTFÄLISCHE WASSERWERKSGESELLSCHAFT)<br>* Page 1, claim 1; page 6, first two paragraphs; page 7, lines 6-19 *<br>--- | | C 02 F |
| A | EP-A-0 086 863 (GEBRÜDER SULZER)<br>* Page 15; claims 1,7,8 *<br>----- | 4 | |

The present search report has been drawn up for all claims

| Place of search | Date of completion of the search | Examiner |
|---|---|---|
| THE HAGUE | 11-09-1986 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82